# EUROPEAN PATENT SPECIFICATION

(11) **EP 2 610 463 B1**
(45) Date of publication and mention of the grant of the patent: **03.08.2016**
(21) Application number: 12197868.8
(22) Date of filing: 18.12.2012
(51) Int. Cl.: F02C 3/107, F02K 3/06, F02C 7/04, F02C 7/36

(54) **Gas turbine engine gear train**
Getriebezug eines Gasturbinenmotors
Train d'engrenages de moteur à turbine à gaz

(30) Priority: 30.12.2011 US 201113340737
(43) Date of publication of application: 03.07.2013
(60) Divisional application: 16171476.1
(73) Proprietor: United Technologies Corporation, Hartford, CT 06101 (US)
(72) Inventor: McCune, Michael E., Colchester, CT 06415 (US); Portlock, Lawrence E., Bethany, CT 06524 (US); Schwarz, Frederick M., Glastonbury, CT 06033 (US)
(74) Representative: Hull, James Edward

(56) References cited:
- EP-A1- 1 890 054
- US-A1- 2008 006 018
- US-A1- 2009 053 058
- US-A1- 2009 081 039
- US-A1- 2009 314 881

## Description

### BACKGROUND OF THE INVENTION

This invention relates to a ring gear used in an epicyclic gear train of a gas turbine engine.

Gas turbine engines typically employ an epicyclic gear train connected to the turbine section of the engine, which is used to drive the turbo fan. In a typical epicyclic gear train, a sun gear receives rotational input from a turbine shaft through a compressor shaft. A carrier supports intermediate gears that surround and mesh with the sun gear. A ring gear surrounds and meshes with the intermediate gears. In arrangements in which the carrier is fixed against rotation, the intermediate gears are referred to as "star" gears and the ring gear is coupled to an output shaft that supports the turbo fan.

Typically, the ring gear is connected to the turbo fan shaft using a spline ring. The spline ring is secured to a flange of the turbo fan shaft using circumferentially arranged bolts. The spline ring includes splines opposite the flange that supports a splined outer circumferential surface of the ring gear. The ring gear typically includes first and second portions that provide teeth facing in opposite directions, which mesh with complimentary oppositely facing teeth of the star gears.

An epicyclic gear train must share the load between the gears within the system. As a result, the splined connection between the ring gear and spline ring is subject to wear under high loads and deflection. Since the spline connection requires radial clearance, it is difficult to get a repeatable balance of the turbo fan assembly. Balance can also deteriorate over time with spline wear.

A prior art engine having an epicyclic gear train is disclosed in US-2009/0081039. Other prior art engines are disclosed in US-2009/0314881 and US-2009/0053058.

### SUMMARY

According to the present invention, there is provided a gear apparatus as claimed in claim 1, and a turbine engine as claimed in claim 6.

In a further embodiment of the foregoing gear apparatus, the radially inner journal surface of each of the star gears is in contact with the peripheral journal surface of the respective journal bearing along an axial length with respect to a rotational axis of the respective star gear.

In a further embodiment of the foregoing gear apparatus, the radially inner journal surface of each of the star gears is in contact with the peripheral journal surface of the respective journal bearing along a substantially full axial length of the respective star gear with respect to a rotational axis of the respective star gear.

In a further embodiment of the foregoing gear apparatus, the epicyclic gear train has a gear reduction ratio of greater than or equal to 2.3.

In a further embodiment of the foregoing gear apparatus, the epicyclic gear train has a gear reduction ratio of greater than or equal to about 2.5.

In a further embodiment of the foregoing gear apparatus, the epicyclic gear train has a gear reduction ratio of greater than or equal to 2.5.

In a further embodiment of the foregoing turbine engine, the radially inner journal surface of each of the star gears is in contact with the peripheral journal surface of the respective journal bearing along an axial length with respect to a rotational axis of the respective star gear.

In a further embodiment of the foregoing turbine engine the radially inner journal surface of each of the star gears is in contact with the peripheral journal surface of the respective journal bearing along a substantially full axial length of the respective star gear with respect to a rotational axis of the respective star gear.

In a further embodiment of the foregoing turbine engine, the epicyclic gear train has a gear reduction ratio of greater than or equal to 2.3.

In a further embodiment of the foregoing turbine engine, the epicyclic gear train has a gear reduction ratio of greater than or equal to about 2.5.

In a further embodiment of the foregoing turbine engine, the epicyclic gear train has a gear reduction ratio of greater than or equal to 2.5.

In a further embodiment of the foregoing turbine engine the fan defines a bypass ratio of greater than about ten with regard to a bypass airflow and a core airflow.

In a further embodiment of the foregoing turbine engine, the fan defines a bypass ratio of greater than about 10.5:1 with regard to a bypass airflow and a core airflow.

In a further embodiment of the foregoing turbine engine, the fan defines a bypass ratio of greater than ten with regard to a bypass airflow and a core airflow.

In a further embodiment of the foregoing turbine engine, the fan defines a pressure ratio that is less than about 1.45.

In a further embodiment of the foregoing turbine engine, the fan defines a pressure ratio that is that is less than 1.45.

Although different examples have the specific components shown in the illustrations, embodiments of this invention are not limited to those particular combinations. It is possible to use some of the components or features from one of the examples in combination with features or components of another of the examples.

These and other features disclosed herein can be best understood from the following specification and drawings, the following of which is a brief description.

### BRIEF DESCRIPTION OF THE DRAWINGS

Various embodiments of the present invention will now be described, by way of example only, and with reference to the accompanying drawings in which:
Figure 1 is a partial cross-sectional view of a front portion of a gas turbine engine illustrating a turbo fan, epicyclic gear train and a compressor section;
Figure 2 is an enlarged cross-sectional view of the epicyclic gear train shown in Figure 1;
Figure 3 is an enlarged cross-sectional view of an example ring gear similar to the arrangement shown in Figure 2; and
Figure 4 is a view of the ring gear shown in Figure 3 viewed in a direction that faces the teeth of the ring gear in Figure 3.

### DETAILED DESCRIPTION

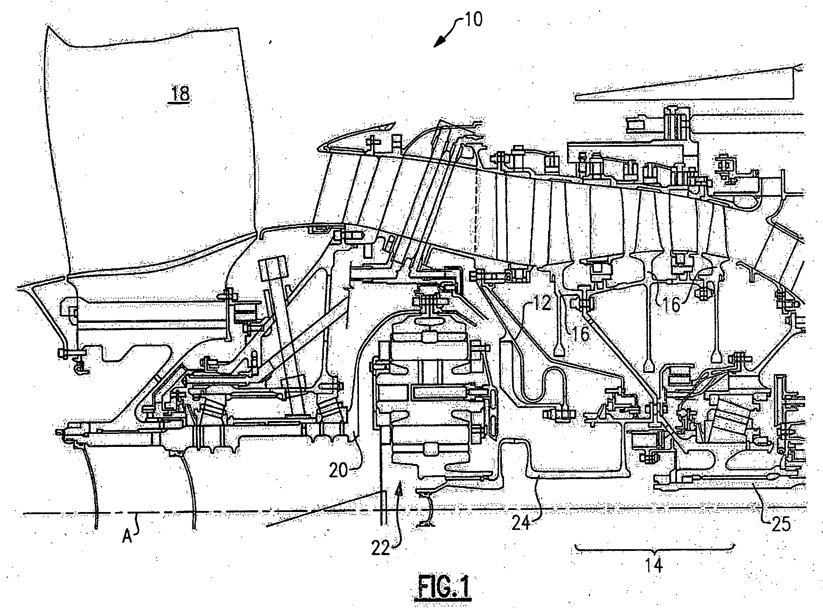

A portion of a gas turbine engine 10 is shown schematically in Figure 1. The turbine engine 10 includes a fixed housing 12 that is constructed from numerous pieces secured to one another. A compressor section 14 having compressor hubs 16 with blades are driven by a turbine shaft 25 about an axis A. A turbo fan 18 is supported on a turbo fan shaft 20 that is driven by a compressor shaft 24, which supports the compressor hubs 16, through an epicyclic gear train 22.

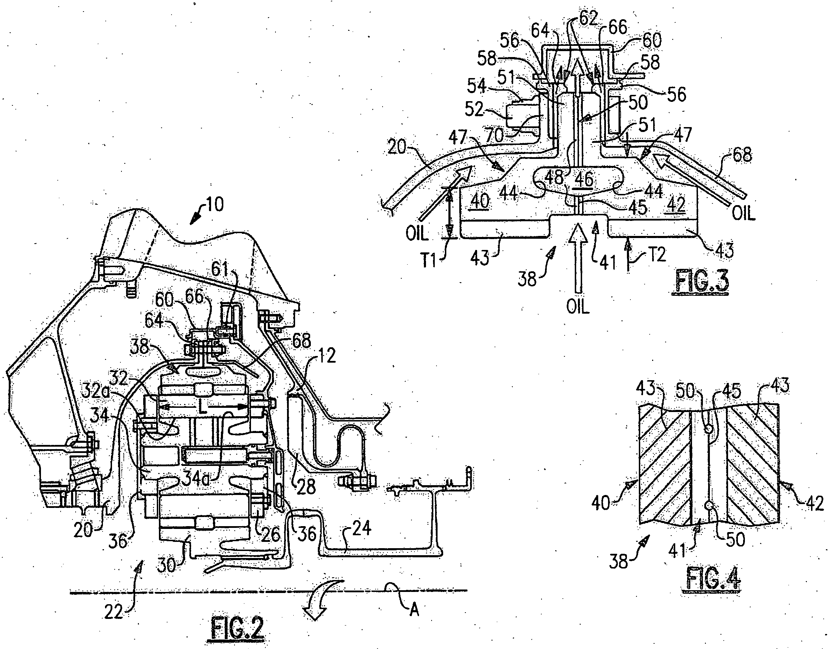

In the example arrangement shown, the epicyclic gear train 22 is a star gear train. Referring to Figure 2, the epicyclic gear train 22 includes a sun gear 30 that is connected to the compressor shaft 24, which provides rotational input, by a splined connection. A carrier 26 is fixed to the housing 12 by a torque frame 28 using fingers (not shown) known in the art. The carrier 26 supports star gears 32 using journal bearings 34 that are coupled to the sun gear 30 by meshed interfaces between the teeth of sun and star gears 30, 32. Multiple star gears 32 are arranged circumferentially about the sun gear 30. Retainers 36 retain the journal bearings 34 to the carrier 26. A ring gear 38 surrounds the carrier 26 arid is coupled to the star gears 32 by meshed interfaces. The ring gear 38, which provides rotational output, is secured to the turbo fan shaft 20 by circumferentially arranged fastening elements, which are described in more detail below.

The star gears 32 are supported on respective ones of the journal bearings 34, Each of the journal bearings 34 includes a peripheral journal surface 34a and each of the star gears 32 includes a radially inner journal surface 32a that is in contact with the peripheral journal surface 34a of the respective journal bearing 34. The radially inner journal surface 32a of each of the star gears 32 is in contact with the peripheral journal surface 34a of the respective journal bearing 34 along an axial length L, with respect to a rotational axis of the respective star gear 32, which is substantially parallel to the axis A. In this example, the radially inner journal surface 32a of each of the star gears 32 is in contact with the peripheral journal surface 34a of the respective journal bearing 34 along a substantially full axial length L of the respective star gear 32. Thus, the journal bearings 34 provide a "line" contact. In comparison, a ball bearing would provide a "point" contact. The "line" contact between the journal bearings 34 and the star gears 32 distributes loads on the journal bearings 34, rather than focusing the load at a single point, and thereby enhances the durability of the epicyclic gear train 22.

In one disclosed, non-limiting embodiment, the engine 10 has a bypass ratio that is greater than about six (6:1) to ten (10:1), the epicyclic gear train 22 is a planetary gear system or other gear system with a gear reduction ratio of greater than about 2.3 or greater than about 2.5, and a low pressure turbine of the engine 10 has a pressure ratio that is greater than about five (5:1). In one disclosed embodiment, the engine 10 bypass ratio is greater than about ten (10:1) or greater than about 10.5:1, the turbofan 18 diameter is significantly larger than that of the low pressure compressor of the compressor section 14, and the low pressure turbine has a pressure ratio that is greater than about five (5:1). In one example, the epicyclic gear train 22 has a gear reduction ratio of greater than about 2.3:1 or greater than about 2.5:1. It should be understood, however, that the above parameters are only exemplary of one embodiment of a geared architecture engine and that the present invention is applicable to other gas turbine engines including direct drive turbofans.

A significant amount of thrust is provided by a bypass flow B due to the high bypass ratio. The fan 18 of the engine 10 is designed for a particular flight condition -- typically cruise at about 0.8M and about 35,000 feet (10,668 m). The flight condition of 0.8 M and 35,000 ft (10,668 m), with the engine at its best fuel consumption - also known as "bucket cruise TSFC" is the industry standard parameter of lbm of fuel being burned divided by lbf of thrust the engine produces at that minimum point. "Low fan pressure ratio" is the pressure ratio across the fan blade alone. The low fan pressure ratio as disclosed herein according to one non-limiting embodiment is less than about 1.45. "Low corrected fan tip speed" is the actual fan tip speed in ft/sec divided by an industry standard temperature correction of [(Tambient deg R) / 518.7)^0.5]. The "Low corrected fan tip speed" as disclosed herein according to one non-limiting embodiment is less than about 1150 ft / second (350.52 m/s).

Referring to Figures 3 and 4, the ring gear 38 is a two-piece construction having first and second portions 40, 42. The first and second portions 40, 42 abut one another at a radial interface 45. A trough 41 separates oppositely angled teeth 43 (best shown in Figure 4) on each of the first and second portions 40, 42. The arrangement of teeth 43 forces the first and second portions 40, 42 toward one another at the radial interface 45. The back side of the first and second portions 40, 42 includes a generally S-shaped outer circumferential surface 47 that, coupled with a change in thickness, provides structural rigidity and resistance to overturning moments. The first and second portions 40, 42 have a first thickness T1 that is less than a second thickness T2 arranged axially inwardly from the first thickness T1. The first and second portions 40, 42 include facing recesses 44 that form an internal annular cavity 46.

The first and second portions 40, 42 include flanges 51 that extend radially outward away from the teeth 43. The turbo fan shaft 20 includes a radially outwardly extending flange 70 that is secured to the flanges 51 by circumferentially arranged bolts 52 and nuts 54, which axially constrain and affix the turbo fan shaft 20 and ring gear 38 relative to one another. Thus, the spline ring is eliminated, which also reduces heat generated from windage and churning that resulted from the sharp edges and surface area of the splines. The turbo fan shaft 20 and ring gear 38 can be rotationally balanced with one another since radial movement resulting from the use of splines is eliminated. An oil baffle 68 is also secured to the flanges 51, 70 and balanced with the assembly.

Seals 56 having knife edges 58 are secured to the flanges 51, 70. The first and second portions 40, 42 have grooves 48 at the radial interface 45 that form a hole 50, which expels oil through the ring gear 38 to a gutter 60 that is secured to the carrier 26 with fasteners 61 (Figure 2). The direct radial flow path provided by the grooves 48 reduces windage and churning by avoiding the axial flow path change that existed with splines. That is, the oil had to flow radially and then axially to exit through the spline interface. The gutter 60 is constructed from a soft material such as aluminum so that the knife edges 58, which are constructed from steel, can cut into the aluminum if they interfere. Referring to Figure 3, the seals 56 also include oil return passages 62 provided by first and second slots 64 in the seals 56, which permit oil on either side of the ring gear 38, to drain into the gutter 60. In the example shown in Figure 2, the first and second slots 64, 66 are instead provided in the flange 70 and oil baffle 68, respectively.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gear apparatus, comprising:
an epicyclic gear train (22) including a carrier (26) supporting intermediate gears (32) that mesh with a sun gear (30), and a ring gear (38) surrounding and meshing with the intermediate gears (32),
**characterised in that**:
the intermediate gears (32) are supported on respective journal bearings (34), each of the journal bearings (34) including a peripheral journal surface (34a) and each of the intermediate gears (32) including a radially inner journal surface (32a) in contact with the peripheral journal surface (34a) of the respective journal bearing (34);
the epicyclic gear train (22) has a gear reduction ratio of greater than or equal to 2.3; and
the ring gear (38) comprises first and second portions (40, 42) that abut at a radial interface (45), and each portion (40, 42) comprises an inner surface having teeth (43), an outer circumferential surface (47), a flange (51) that extends radially outwardly from the outer surface (47) away from the teeth (43), and a plurality of lubrication passages (48) at the radial interface (45) that open at the inner surface and the flange (51), wherein the passages (48) are interrupted by an internal annular cavity (46) formed between the first and second portions (40, 42) at the radial interface (45).

2. The gear apparatus as recited in claim 1, wherein the radially inner journal surface (32a) of each of the intermediate gears (32) is in contact with the peripheral journal surface (34a) of the respective journal bearing (34) along an axial length with respect to a rotational axis of the respective intermediate gear (32).

3. The gear apparatus as recited in claim 1, wherein the radially inner journal surface (32a) of each of the intermediate gears (32) is in contact with the peripheral journal surface of the respective journal bearing (34) along a substantially full axial length of the respective intermediate gear (32) with respect to a rotational axis of the respective intermediate gear (32).

4. The gear apparatus as recited in any of claims 1 to 3, wherein the intermediate gears (32) comprise star gears.

5. The gear apparatus as recited in any preceding claim, wherein the epicyclic gear train (22) has a gear reduction ratio of greater than or equal to about 2.5.

6. A turbine engine (10) comprising:
a turbine shaft (25);
a fan (18); and
a gear apparatus as claimed in any preceding claim, wherein the epicyclic gear train (22) is coupled between the turbine shaft (25) and the fan (18).

7. The turbine engine (10) as recited in claim 6, wherein the fan (18) defines a bypass ratio of greater than about ten with regard to a bypass airflow and a core airflow.

8. The turbine engine (10) as recited in claim 6, wherein the fan (18) defines a bypass ratio of greater than about 10.5:1 with regard to a bypass airflow and a core airflow.

9. The turbine engine as recited in any of claims 6 to 8, wherein the fan defines a pressure ratio that is less than about 1.45.

## Patentansprüche

1. Getriebevorrichtung, umfassend:
einen Planetengetriebezug (22) mit einem Träger (26), der Zwischenräder (32) trägt, die mit einem Sonnenrad (30) verzahnt sind, und einem Außenrad (38), das die Zwischenräder (32) umgibt und mit ihnen verzahnt ist,
**dadurch gekennzeichnet, dass**:
die Zwischenräder (32) von jeweiligen Gleitlagern (34) getragen werden, wobei jedes der Gleitlager (34) eine Umfangszapfenfläche (34a) beinhaltet und jedes der Zwischenräder (32) eine radial innere Zapfenfläche (32a) beinhaltet, die in Kontakt mit der Umfangszapfenfläche (34a) des jeweiligen Gleitlagers (34) steht;
der Planetengetriebezug (22) ein Untersetzungsverhältnis größer oder gleich 2,3 aufweist; und
das Außenrad (38) einen ersten und zweiten Abschnitt (40, 42) umfasst, die an einer radialen Grenzfläche (45) anliegen, und jeder Abschnitt (40, 42) eine Innenfläche mit Zähnen (43), eine Außenumfangsfläche (47), einen Flansch (51), der sich von der Außenfläche (47) von den Zähnen (43) fort radial nach außen erstreckt, und eine Vielzahl von Schmierdurchlässen (48) an der radialen Grenzfläche (45) umfasst, die sich an der Innenfläche und dem Flansch (51) öffnen, wobei die Durchlässe (48) von einem internen Ringhohlraum (46) unterbrochen werden, der zwischen dem ersten und zweiten Abschnitt (40, 42) an der radialen Grenzfläche (45) gebildet ist.

2. Getriebevorrichtung nach Anspruch 1, wobei die radial innere Zapfenfläche (32a) der einzelnen Zwischenräder (32) an einer axialen Längenerstreckung in Bezug auf eine Drehachse des jeweiligen Zwischenrads (32) in Kontakt mit der Umfangszapfenfläche (34a) des jeweiligen Gleitlagers (34) steht.

3. Getriebevorrichtung nach Anspruch 1, wobei die radial innere Zapfenfläche (32a) der einzelnen Zwischenräder (32) an einer im Wesentlichen vollständigen axialen Längenerstreckung des jeweiligen Zwischenrads (32) in Bezug auf eine Drehachse des jeweiligen Zwischenrads (32) in Kontakt mit der Umfangszapfenfläche des jeweiligen Gleitlagers (34) steht.

4. Getriebevorrichtung nach einem der Ansprüche 1 bis 3, wobei die Zwischenräder (32) Sternenräder umfassen.

5. Getriebevorrichtung nach einem der vorangehenden Ansprüche, wobei der Planetengetriebezug (22) ein Untersetzungsverhältnis von größer oder gleich etwa 2,5 aufweist.

6. Turbinenmotor (10), umfassend:
eine Turbinenwelle (25);
ein Gebläse (18); und
eine Getriebevorrichtung nach einem der vorangehenden Ansprüche, wobei der Planetengetriebezug (22) zwischen der Turbinenwelle (25) und dem Gebläse (18) gekoppelt ist.

7. Turbinenmotor (10) nach Anspruch 6, wobei das Gebläse (18) ein Nebenstromverhältnis von größer als etwa zehn in Bezug auf einen Nebenluftstrom und einen Kernluftstrom definiert.

8. Turbinenmotor (10) nach Anspruch 6, wobei das Gebläse (18) ein Nebenstromverhältnis von größer als etwa 10,5:1 in Bezug auf einen Nebenluftstrom und einen Kernluftstrom definiert.

9. Turbinenmotor nach einem der Ansprüche 6 bis 8, wobei das Gebläse ein Druckverhältnis definiert, das kleiner als etwa 1,45 ist.

## Revendications

1. Appareil à engrenages, comprenant :
un train d'engrenages épicycloïdal (22) contenant un support (26) soutenant des engrenages intermédiaires (32) qui s'engrènent avec un planétaire (30), et une roue annulaire (38) entourant les engrenages intermédiaires (32) et s'engrenant avec elles, **caractérisé en ce que** :
les engrenages intermédiaires (32) sont soutenus sur des paliers respectifs (34) chacun des paliers (34) contenant une surface périphérique de palier (34a) et chacun des engrenages intermédiaires (32) contenant une surface de palier radialement interne (32a) en contact avec la surface périphérique de palier (34a) du palier respectif (34) ;
le train d'engrenages épicycloïdal (22) a un rapport de réduction d'engrenage supérieur ou égal à 2,3 ; et
la roue annulaire (38) comprend une première et une deuxième parties (40, 42) qui viennent en butée au niveau d'une interface radiale (45), et chaque partie (40, 42) comprend une surface interne comportant des dents (43), une surface circonférentielle externe (47), une bride (51) qui s'étend radialement vers l'extérieur à partir de la surface externe (47) à l'écart des dents (43), et une pluralité de passages de lubrification (48) au niveau de l'interface radiale (45) qui s'ouvre au niveau de la surface interne et de la bride (51), les passages (48) étant interrompus par une cavité annulaire interne (46) formée entre les première et deuxième parties (40, 42) au niveau de l'interface radiale (45).

2. Appareil à engrenages selon la revendication 1, dans lequel la surface de palier radialement interne (32a) de chacun des engrenages intermédiaires (32) est en contact avec la surface périphérique de palier (34a) du palier respectif (34) le long d'une longueur axiale par rapport à un axe de rotation de l'engrenage intermédiaire respectif (32).

3. Appareil à engrenages selon la revendication 1, dans lequel la surface de palier radialement interne (32a) de chacun des engrenages intermédiaires (32) est en contact avec la surface périphérique de palier du palier respectif (34) le long d'une longueur axiale de l'engrenage intermédiaire respectif (32) par rapport à un axe de rotation de l'engrenage intermédiaire respectif (32).

4. Appareil à engrenages selon l'une quelconque des revendications 1 à 3, dans lequel les engrenages intermédiaires (32) comprennent des satellites.

5. Appareil à engrenages selon l'une quelconque des revendications précédentes, dans lequel le train d'engrenages épicycloïdal (22) a un rapport de réduction d'engrenages supérieur ou égal à environ 2,5.

6. Moteur de turbine (10) comprenant :
un arbre de turbine (25) ;
un ventilateur (18) ; et
un appareil à engrenages selon l'une quelconque des revendications précédentes, dans lequel le train d'engrenages épicycloïdal (22) est couplé entre l'arbre de turbine (25) et le ventilateur (18).

7. Moteur de turbine (10) selon la revendication 6, dans lequel le ventilateur (18) définit un rapport de dérivation supérieur à environ dix par rapport à un flux d'air de dérivation et à un flux d'air central.

8. Moteur de turbine (10) selon la revendication 6, dans lequel le ventilateur (18) définit un rapport de dérivation supérieur à environ 10,5:1 par rapport à un flux d'air de dérivation et à un flux d'air central.

9. Moteur de turbine selon l'une quelconque des revendications 6 à 8, dans lequel le ventilateur définit un rapport de pression inférieur à environ 1,45.
